# EUROPEAN PATENT APPLICATION

(11) **EP 3 099 032 A1**
(43) Date of publication of application: **30.11.2016**
(21) Application number: 15737198.0
(22) Date of filing: 20.01.2015
(51) Int. Cl.: H04L 29/06, H04L 12/803

(54) **A LOAD BALANCING METHOD, DEVICE, SYSTEM AND COMPUTER STORAGE MEDIUM**

(30) Priority: 20.01.2014 CN 201410026424
(71) Applicant: ZTE Corporation, Shenzhen, Guangdong 518057 (CN)
(72) Inventor: JIAO, Xinwen, Shenzhen Guangdong 518057 (CN); LIANG, Qiandeng, Shenzhen Guangdong 518057 (CN); CHEN, Ran, Shenzhen Guangdong 518057 (CN)
(74) Representative: Brevalex
(86) International application number: PCT/CN2015/071148
(87) International publication number: WO 2015/106729

(57) **Abstract**

A method, device, system, and a computer storage medium for load balancing are provided. The load balancing method includes that: a switch sends a path selection policy supported by a group table to a controller; the controller determines an appointed path selection policy according to the received path selection policy and an Application (APP) or a service requirement of the controller; the controller sends a Select-type group table entry and the appointed path selection policy to the switch; and when executing a Select-type group table on traffic, the switch executes a path selection algorithm according to the received appointed path selection policy.

## Description

### TECHNICAL FIELD

The present disclosure relates to a communication technology, and in particular to a method, device, system and computer storage medium for load balancing.

### BACKGROUND

A Software Defined Network (SDN) is an innovation framework of a novel network. An OpenFlow protocol adopted by the SDN separates a control plane (containing an OpenFlow controller) of a network device from a data plane (containing an OpenFlow capable switch) of the network device, thereby achieving flexible control over network traffic and providing a good platform for innovations of a core network and an Application (APP).

The OpenFlow protocol is employed to describe a standard of information for interaction between a controller and a switch, and interface standards of the controller and the switch. A core part of the protocol is a set for OpenFlow protocol information structures.

The controller manages the switch via the OpenFlow protocol. By means of the protocol, the controller may actively or passively add, update or delete a flow entry.

An Equal Cost Multi-Path (ECMP) technology is a technology capable of effectively utilizing network transmission bandwidths. In a traditional routing technology, traffic sent to a certain destination address can utilize only one link, other links are in a standby or invalid state, and it takes time to carry out switching between links under a dynamic routing environment. Under the introduction of the ECMP technology, the traffic sent to a certain destination address can be allocated to multiple equivalent paths.

In actual forwarding, a device often achieves load balancing of traffics on different paths via different policies, thereby further improving the utilization efficiency of links in actual forwarding. Common flow distribution policies include: a per-packet policy and a per-flow policy. Under the load balancing of the per-packet policy, data messages directed to the same destination are allocated to different paths in a balancing manner. Under the load balancing of the per-flow policy, messages directed to the same destination address are divided into different flows according to some elements in the messages (an Internet Protocol (IP) message often includes five elements: a source IP address, a destination IP address, an IP number, a source port number and a destination port number), and then different flows are allocated to different paths in a balancing manner.

An ECMP is implemented by a Select-type group table according to an existing Openflow protocol, different ECMP forwarding paths are expressed by different buckets under the group table, and when messages enter an Openflow forwarding pipeline and are executed in the Select-type group table containing different buckets, the messages will be allocated to a certain bucket to be processed according to a load balancing algorithm.

However, in the existing Openflow protocol, when the Select-type group table is executed, an Openflow controller does not designate a load balancing algorithm for a switch, or does not specify a message element participating in load sharing calculation. Thus, the following two problems appear.

Under the per-packet policy, the traffic designated by the controller is allocated to different paths by a path selection algorithm of the switch, thus causing a disorder.

Under the per-flow policy, the Openflow protocol defines a plurality of message fields as identifiers of traffic (an Openflow 1.3 version has 40 fields), a traditional forwarding device often selects limited fields to identify traffic, IP forwarding is often based on an IP five-element set, Multi-Protocol Label Switching (MPLS) forwarding is based on source and destination Media Access Control (MAC) and label values, the strength of traffic identification of the switch is often over-high. When the strength of traffic identification of the switch is over-high, traffic definition of the controller cannot be finely controlled, and when the strength of traffic identification of the controller is over-high, the traffic designated by the controller is probably disordered.

### SUMMARY

In order to solve the existing technical problems, the embodiments of the present disclosure provide a method, device, system and a computer storage medium for load balancing. Specifically,

an embodiment of the present disclosure provides a load balancing method, which may include that:
a switch sends a path selection policy supported by a group table;
a Select-type group table entry and an appointed path selection policy are received; and
when a Select-type group table is executed on traffic, a path selection algorithm is executed according to the received appointed path selection policy.

The present disclosure provides another method for load balancing, which may include that:
a controller receives a path selection policy supported by a group table;
an appointed path selection policy is determined according to the received path selection policy and an APP or a service requirement of the controller; and
a Select-type group table entry and the appointed path selection policy are sent.

An embodiment of the present disclosure provides still another method for load balancing, which may include that:
a switch sends a path selection policy supported by a group table to a controller;
the controller determines an appointed path selection policy according to the received path selection policy and an APP or a service requirement of the controller;
the controller sends a Select-type group table entry and the appointed path selection policy to the switch; and
when a Select-type group table is executed on traffic, the switch executes a path selection algorithm according to the received appointed path selection policy.

An embodiment of the present disclosure provides a switch, which may include:
a first sending unit, configured to send a path selection policy supported by a group table;
a first receiving unit, configured to receive a Select-type group table entry and an appointed path selection policy; and
an execution unit, configured to execute, when executing a Select-type group table on traffic, a path selection algorithm according to the received appointed path selection policy.

An embodiment of the present disclosure provides a controller, which may include:
a second receiving unit, configured to receive a path selection policy supported by a group table;
a determination unit, configured to determine an appointed path selection policy according to the received path selection policy and an APP or a service requirement of the controller; and
a second sending unit, configured to send a Select-type group table entry and the appointed path selection policy.

An embodiment of the present disclosure provides a system for load balancing, which may include a controller and at least one switch, wherein the switch is configured to send a path selection policy supported by a group table to the controller, and execute, when executing a Select-type group table on traffic, a path selection algorithm according to the appointed path selection policy sent by the controller; and
the controller is configured to determine an appointed path selection policy according to the path selection policy sent by the switch and an APP or a service requirement of the controller, and send a Select-type group table entry and the appointed path selection policy to the switch.

An embodiment of the present disclosure provides a computer storage medium, which have computer executable instructions stored therein configured to execute the above methods.

Thus it can be seen that the technical solution of the embodiments of the present disclosure includes that: a switch sends a path selection policy supported by a group table, receives a Select-type group table entry and an appointed path selection policy, and executes, when executing a Select-type group table on traffic, a path selection algorithm according to the received appointed path selection policy. Thus, a solution for traffic ECMP load balancing in an SDN is provided by the embodiments of the present disclosure, solving the problem of message disorder in each traffic flow.

### BRIEF DESCRIPTION OF THE DRAWINGS

Fig. 1 is a structural diagram of an SDN;
Fig. 2 is an implementation flowchart of an embodiment for a load balancing method provided by the present disclosure;
Fig. 3 is an implementation flowchart of an embodiment for another load balancing method provided by the present disclosure;
Fig. 4 is an implementation flowchart of an embodiment for still another load balancing method provided by the present disclosure;
Fig. 5 is a structural diagram of an embodiment for a switch provided by the present disclosure;
Fig. 6 is a structural diagram of an embodiment for a controller provided by the present disclosure;
Fig. 7 is a structural diagram of an embodiment for a load balancing system provided by the present disclosure;
Fig. 8 is an implementation flowchart of a first embodiment for still another load balancing method provided by the present disclosure;
Fig. 9 is an implementation flowchart of a second embodiment for still another load balancing method provided by the present disclosure; and
Fig. 10 is an implementation flowchart of a third embodiment for still another load balancing method provided by the present disclosure.

### DETAILED DESCRIPTION

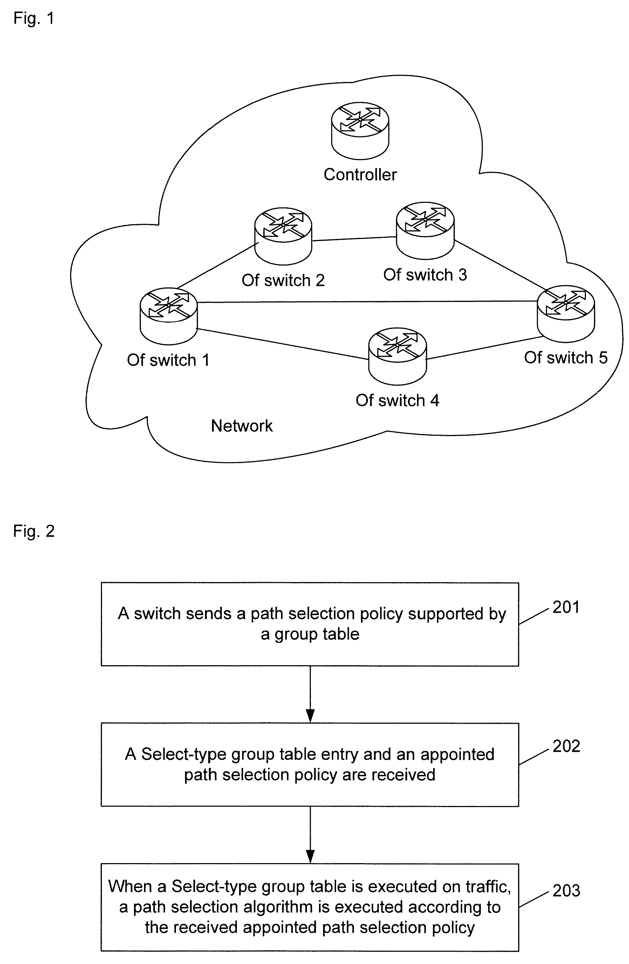

According to an embodiment for a load balancing method provided by the present disclosure, as shown in Fig. 2, the method includes the steps as follows.

Step 201: A switch sends a path selection policy supported by a group table.

Here, the switch is an Openflow switch, and when reporting capabilities of the group table to a controller, the Openflow switch informs the controller of the path selection policy supported by the group table. The path selection policy at least includes one of per-flow and per-packet, and the path selection policy in a per-packet mode is supported by default.

Step 202: A Select-type group table entry and an appointed path selection policy are received.

Step 203: When a Select-type group table is executed on traffic, a path selection algorithm is executed according to the received appointed path selection policy.

Here, executing the path selection algorithm according to the appointed path selection policy and an appointed path selection key value may include:
extracting an element from a message according to a path selection key value, and executing a per-flow algorithm.

In one embodiment, when the path selection policy supported by the group table is per-flow, the method further includes that:
the switch sends the path selection key value; and
the appointed path selection key value is received.

Correspondingly, executing the path selection algorithm may include:
executing the path selection algorithm according to the received appointed path selection policy and the appointed path selection key value.

Here, by default, the controller considers that the Openflow switch supports any combination of match fields as a key value.

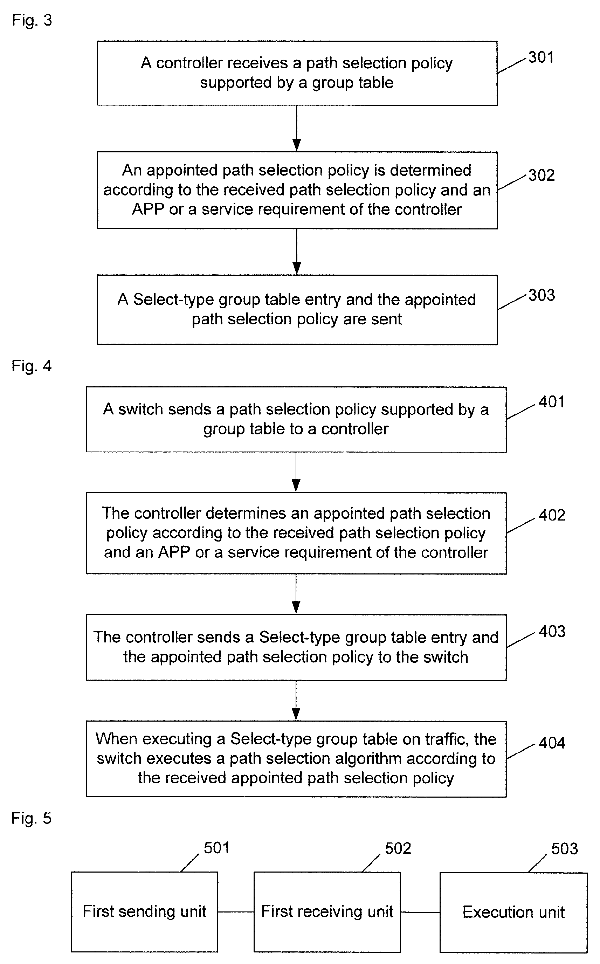

According to an embodiment for another load balancing method provided by the present disclosure, as shown in Fig. 3, the method includes the steps as follows.

Step 301: A controller receives a path selection policy supported by a group table.

Step 302: An appointed path selection policy is determined according to the received path selection policy and an APP or a service requirement of the controller.

Step 303: An entry about a Select-type group table and the appointed path selection policy are sent.

In one embodiment, the method further includes that:
the controller receives a path selection key value; and
an appointed path selection key value is determined according to the received path selection key value and the APP or the service requirement of the controller, and is sent.

As shown in Fig. 4, another load balancing method provided by the present disclosure includes the steps as follows.

Step 401: A switch sends a path selection policy supported by a group table to a controller.

Step 402: The controller determines an appointed path selection policy according to the received path selection policy and an APP or a service requirement of the controller.

Step 403: The controller sends a Select-type group table entry and the appointed path selection policy to the switch.

Step 404: When executing a Select-type group table on traffic, the switch executes a path selection algorithm according to the received appointed path selection policy.

In one embodiment, when the path selection policy supported by the group table is per-flow, the method further includes that:
the switch sends a path selection key value to the controller; and
the controller determines an appointed path selection key value according to the received path selection key value and the APP or the service requirement of the controller, and sends the appointed path selection key value to the switch.

Correspondingly, executing the path selection algorithm may include:
executing, by the switch, the path selection algorithm according to the received appointed path selection policy and the appointed path selection key value.

According to an embodiment for a switch provided by the present disclosure, as shown in Fig. 5, the switch includes:
a first sending unit 501, configured to send a path selection policy supported by a group table;
a first receiving unit 502, configured to receive a Select-type group table entry and an appointed path selection policy; and
an execution unit 503, configured to execute, when executing a Select-type group table on traffic, a path selection algorithm according to the received appointed path selection policy.

In one embodiment, the first sending unit 501 is further configured to send a path selection key value;
the first receiving unit 502 is further configured to receive an appointed path selection key value; and
the execution unit 503 is specifically configured to execute, when executing the Select-type group table on the traffic, the path selection algorithm according to the received appointed path selection policy and the appointed path selection key value.

Here, the execution unit 503 may be specifically configured to extract an element from a message according to the path selection key value, and execute a per-flow algorithm.

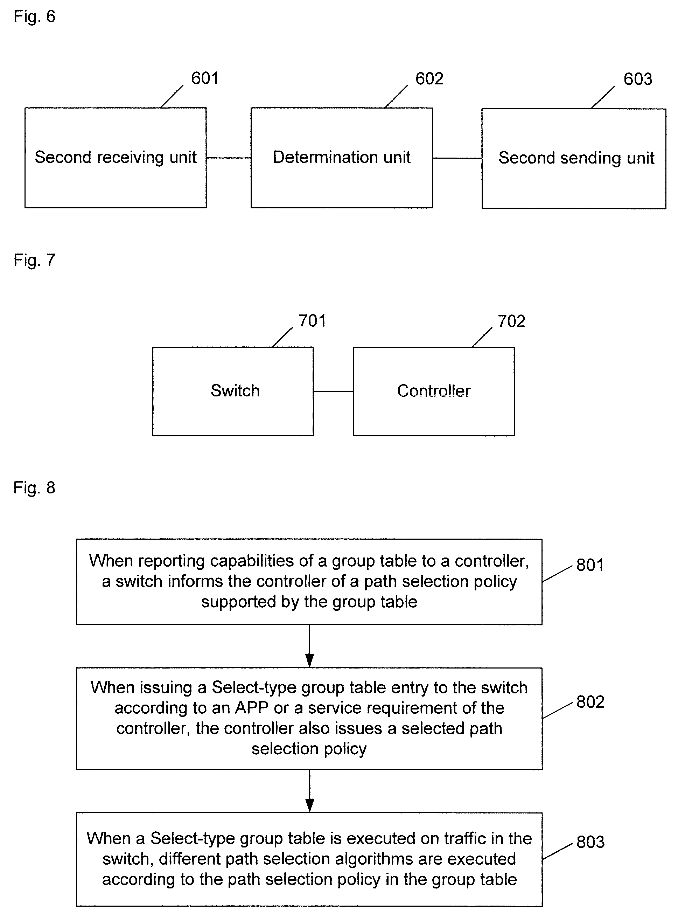

According to an embodiment for a controller provided by the present disclosure, as shown in Fig. 6, the controller includes:
a second receiving unit 601, configured to receive a path selection policy supported by a group table;
a determination unit 602, configured to determine an appointed path selection policy according to the received path selection policy and an APP or a service requirement of the controller; and
a second sending unit 603, configured to send a Select-type group table entry and the appointed path selection policy.

In one embodiment, the second sending unit 601 is further configured to receive a path selection key value;
the determination unit 602 is further configured to determine an appointed path selection key value according to the received path selection key value and the APP or the service requirement of the controller; and
the second sending unit 603 is further configured to send the appointed path selection key value.

According to an embodiment for a load balancing system provided by the present disclosure, as shown in Fig. 7, the system includes a controller and at least one switch, wherein the switch 701 is configured to send a path selection policy supported by a group table to the controller, and execute, when executing a Select-type group table on traffic, a path selection algorithm according to the appointed path selection policy sent by the controller; and
the controller 702 is configured to determine an appointed path selection policy according to the path selection policy sent by the switch and an APP or a service requirement of the controller, and send a Select-type group table entry and the appointed path selection policy to the switch.

In one embodiment, when the path selection policy supported by the group table is per-flow, the switch 701 is configured to send a path selection key value to the controller, and execute the path selection algorithm according to the appointed path selection policy sent by the controller and an appointed path selection key value; and
the controller 702 is further configured to determine the appointed path selection key value according to the received path selection key value and the APP or the service requirement of the controller, and send the appointed path selection key value to the switch.

According to a first embodiment for another load balancing method provided by the present disclosure, as shown in Fig. 8, the embodiment includes the steps as follows.

Step 801: When reporting capabilities of a group table to a controller, an Openflow switch informs the controller of a path selection policy supported by the group table.

In the step, the path selection policy includes a per-packet policy and a per-flow policy.

Under the load balancing of the per-packet policy, data messages directed to the same destination are allocated to different paths in a balancing manner. Under the load balancing of the per-flow policy, messages directed to the same destination address are divided into different flows according to a path selection key value, and then different flows are allocated to different paths in a balancing manner.

By default, the controller considers that the Openflow switch supports all Match fields to act as key values.

Step 802: When issuing a Select-type group table entry to the switch according to an APP or a service requirement of the controller, the controller also issues a selected path selection policy, the selected path selection policy being called an appointed path selection policy.

In the step, the selected path selection policy is within the range of the capabilities reported by the Openflow switch.

When the selected path selection policy issued by the controller while issuing the Select-type group table entry to the switch according to the APP or the service requirement of the controller is the per-flow path selection policy, a path selection key value is also issued.

Step 803: When a Select-type group table is executed on traffic in the Openflow switch, different path selection algorithms are executed according to the path selection policy in the group table.

When the path selection policy selected in Step 802 is the per-flow path selection policy, in this step, when the Select-type group table is executed on the traffic in the Openflow switch, a path selection algorithm is selected according to the path selection policy in the group table, and in addition, the path selection algorithm is executed according to the path selection key value.

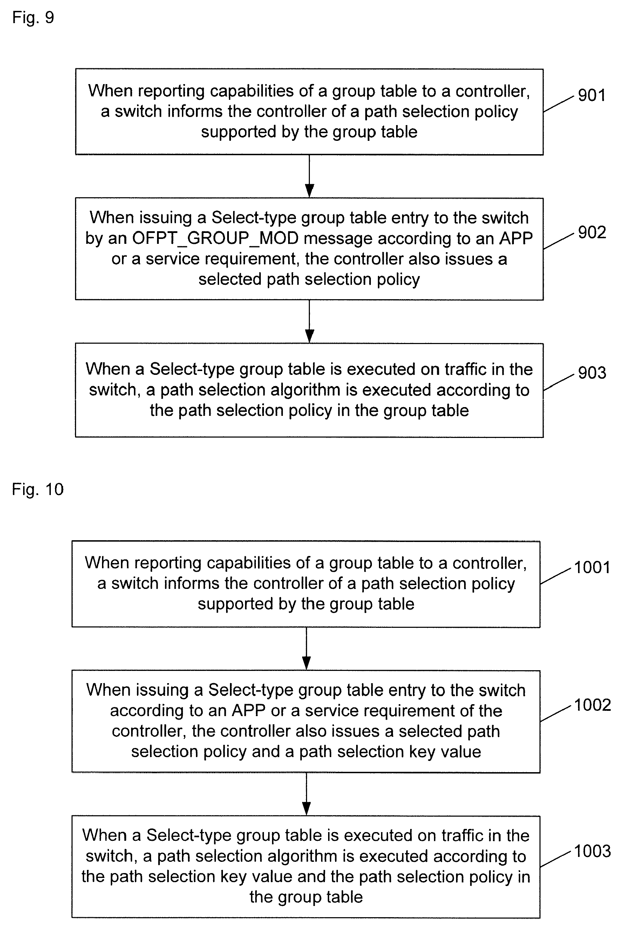

In a second embodiment for another load balancing method provided by the present disclosure, a path selection policy for ECMP load balancing of an SDN is per-packet. As shown in Fig. 9, the embodiment includes the steps as follows.

Step 901: When reporting capabilities of a group table to a controller, an Openflow switch informs the controller of a path selection policy (at least containing per-packet) supported by the group table.

In the step, when reporting the capabilities of the group table to the controller by an OFPMP GROUP_FEATURES reply message defined by an Openflow protocol, the Openflow switch may only report whether to report a per-flow path selection policy, a per-packet path selection policy being supported by default.

Step 902: When issuing a Select-type group table entry to the switch by an OFPT_GROUP_MOD message according to an APP or a service requirement, the controller also issues a selected path selection policy.

In the step, the path selection policy selected by the controller according to the APP or the service requirement is the per-packet path selection policy.

Step 903: When a Select-type group table is executed on traffic in the Openflow switch, a path selection algorithm is executed according to the path selection policy in the group table.

A data structure is described as follows.
(1) Flag bits in capabilities in an OFPMP GROUP_FEATURES reply message are expanded and are used to represent path selection policies supported by a group table:

   ```
                      /* Body of reply to OFPMP GROUP_FEATURES request. Group features. */
                      struct ofp_group_features {
                        uint32_t types; /* Bitmap of OFPGT_* values supported. */
                        uint32_t capabilities; /* Bitmap of OFPGFC_* capability supported. */
                        uint32_t t max_groups[4]; /* Maximum number of groups for each type. */
                        uint32_t actions[4]; /* Bitmaps of OFPAT_* that are supported. */
                      };
                      OFP_ASSERT(sizeof(struct ofp_group_features) == 40);
                      /* Group configuration flags */
                      enum ofp_group_capabilities {
                        OFPGFC_SELECT_WEIGHT = 1 << 0, /* Support weight for select groups */
                        OFPGFC_SELECTLIVENESS = 1 << 1, /* Support liveness for select groups */
                        OFPGFC_CHAINING = 1 << 2, /* Support chaining groups */
                        OFPGFC_CHAINING_CHECKS = 1 << 3, /* Check chaining for loops
                        and delete */
                         OFPGFC_SELECT_PER_FLOW = 1 << 4, /*Support
                         per flow policy for select
                 groups*/
                      };
```
(2) An OFPT_GROUP _MOD message is expanded, and a path selection policy (per-packet or per-flow) and a path selection key value are added. The latter is an array having variable length, and comes into effect only on a Select-type group table entry of which the path selection policy is per-flow. After an Openflow switch receives the Select-type group table entry, if per-flow is not supported or parameters do not correspond or there is a non-supported path selection key value, an Error message is replied, by which a corresponding error type and error code information are carried to a controller.

A data structure of the path selection key value in expansion can use a definition of struct ofp_table_feature_prop_oxm, the data structure being a length-variable data definition type.

```
                      /* Group setup and teardown (controller -> datapath). */
                      struct of p_group_mod {
                        struct ofp_header header;
                        uint16_t command; /* One of OFPGC_*· */
                        uint8_t type; /* One of OFPGT_*. */
                         uint8_t policy; /*per flow or per packe*/
                         uint32_t group_id; /* Group identifier. */
                         struct ofp_bucket buckets[0]; /* The length of the
                         bucket array is inferred from
                 the length field in the header. */
                      struct ofp_table_feature_prop_oxm /*keys for ecmp per flow selecting; */
                      };
                      OFP_ASSERT(sizeof(struct ofp_group_mod) == 16);
                      /* Table Feature property types.
                      * Low order bit cleared indicates a property for a regular Flow Entry.
                      * Low order bit set indicates a property for the Table-Miss Flow Entry.
                      */
                      enum ofp_table_feature_prop_type {
                      OFPTFPT_INSTRUCTIONS = 0, /* Instructions property. */
                      OFPTFPT_INSTRUCTIONS_MISS = 1, /* Instructions for table-miss. */
                      OFPTFPT_NEXT_TABLES = 2, /* Next Table property. */
                      OFPTFPT_NEXT_TABLES_MISS = 3, /* Next Table for table-miss. */
                      OFPTFPT_WRITE_ACTIONS = 4, /* Write Actions property. */
                      OFPTFPT_WRITE_ACTIONS_MISS = 5, /* Write Actions for table-miss. */
                      OFPTFPT_APPLY_ACTIONS = 6, /* Apply Actions property. */
                      OFPTFPT_APPLY_ACTIONS_MISS = 7, /* Apply Actions for table-miss. */
                      OFPTFPT_MATCH = 8, /* Match property. */
                      OFPTFPT_WILDCARDS = 10, /* Wildcards property. */
                      OFPTFPT_WRITE_SETFIELD = 12, /* Write Set-Field property. */
                      OFPTFPT_WRITE_SETFIELD_MISS = 13, /* Write Set-Field for table-miss. */
                      OFPTFPT_APPLY_SETFiELD = 14, /* Apply Set-Field property. */
                      OFPTFPT_APPLY_SETFIELD_MISS = 15, /* Apply Set-Field for table-miss. */
                      OFPTFPT_EXPERIMENTER = OxFFFE, /* Experimenter property. */
                      OFPTFPT_EXPERIMENTER_MISS = OxFFFF, /* Experimenter for table-miss. */
                      };
                      /* Match, Wildcard or Set-Field property */
                      struct ofp_table_feature_prop_oxm {
                           uint16_t type; /*One of OFPTFPT_MATCH,
                      OFPTFPT_WILDCARDS,
                      OFPTFPT_WRITE_SETFIELD,
                      OFPTFPT_WRITE_SETFIELD_MISS,
                      OFPTFPT_APPLY_SETFIELD,
                      OFPTFPT_APPLY_SETFIELD_MISS,
                      OFPTFPT_SET_GROUP_SELECT*/
                           uint16 length; /* Length in bytes of this property. */
                          /* Followed by:
                               * - Exactly (length - 4) bytes containing the oxm_ids, then
                               * - Exactly (length + 7)/8*8 - (length) (between 0 and 7)
                               * bytes of all-zero bytes */
                           uint32_t oxm_ids[0]; / * Array of OXM headers */
                      };
                      OFP_ASSERT(sizeof(struct ofp_table_feature_prop_oxm) == 4);
```

In a third embodiment for another load balancing method provided by the present disclosure, a path selection policy for ECMP load balancing of an SDN is per-flow. As shown in Fig. 10, the embodiment includes the steps as follows.

Step 1001: When reporting capabilities of a group table to a controller, an Openflow switch informs the controller of a path selection policy (at least containing per-flow) supported by the group table.

In the step, when reporting the capabilities of the group table to the controller, the Openflow switch may only report the supported per-flow path selection policy and a supported path selection key value, and the path selection key value may reuse existing definitions of Match fields, may support path selection according to five elements (a source IP, a destination IP, a protocol type, a source port and a destination port) as key values, and may also support path selection by taking any set of Match preset definition fields as a key value.

Step 1002: When issuing a Select-type group table entry to the switch according to an APP or a service requirement of the controller, the controller also issues a selected path selection policy and a path selection key value (for instance, a five-element set).

In the step, the path selection policy selected by the controller according to the APP or the service requirement of the controller is the per-flow path selection policy.

Step 1003: When a Select-type group table is executed on traffic in the Openflow switch, a path selection algorithm is executed according to the path selection key value and the path selection policy in the group table.

In the step, the Openflow switch extracts an element from a message according to the path selection key value issued by the controller, and then executes a per-flow algorithm, the path selection algorithm can be self-selected by the Openflow switch, and effective hashing may be carried out according to the path selection key value.

An embodiment of the present disclosure also provides a computer storage medium. Computer executable instructions are stored therein to be configured to execute the methods according to any one of the above method embodiments.

In conclusion, a solution for traffic ECMP load balancing in an SDN provided by the embodiments of the present disclosure can finely control traffic, and solves the problem of message disorder in each traffic flow.

Each unit described above can be implemented by a Central Processing Unit (CPU), a Digital Signal Processor (DSP) or a Field-Programmable Gate Array (FPGA) in an electronic device.

Those skilled in the art shall understand that the embodiments of the present disclosure may be provided as a method, a system or a computer program product. Thus, hardware embodiments, software embodiments or embodiments integrating software and hardware may be adopted in the present disclosure. Moreover, a computer program product implemented on one or more computer available storage media (including, but are not limited to, a disk memory, an optical memory and the like) containing computer available program codes may be adopted in the present disclosure.

The present disclosure is described with reference to flow charts and/or block diagrams of the method, the device (system) and the computer program product according to the embodiments of the present disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or other programmable data processing devices, such that processing implemented by the computers is generated by executing a series of operation steps on the computers or other programmable devices, and therefore the instructions executed on the computers or other programmable devices provide a step of implementing the functions designated in one or more flows of the flow charts and/or one or more blocks of the block diagrams.

## Claims

1. A method for load balancing, comprising:
sending, by a switch, a path selection policy supported by a group table;
receiving a Select-type group table entry and an appointed path selection policy; and
executing, when executing a Select-type group table on traffic, a path selection algorithm according to the received appointed path selection policy.

2. The method according to claim 1, wherein when the path selection policy supported by the group table is per-flow,
the method further comprises:
sending, by the switch, a path selection key value; and
receiving an appointed path selection key value;
correspondingly, executing the path selection algorithm comprises:
executing the path selection algorithm according to the received appointed path selection policy and the appointed path selection key value.

3. The method according to claim 2, wherein executing the path selection algorithm according to the appointed path selection policy and the appointed path selection key value comprises:
extracting an element from a message according to the path selection key value, and executing a per-flow algorithm.

4. A method for load balancing, comprising:
receiving, by a controller, a path selection policy supported by a group table;
determining an appointed path selection policy according to the received path selection policy and an Application (APP) or a service requirement of the controller; and
sending a Select-type group table entry and the appointed path selection policy.

5. The method according to claim 4, further comprising:
receiving, by the controller, a path selection key value; and
determining an appointed path selection key value according to the received path selection key value and the APP or the service requirement of the controller, and sending the appointed path selection key value.

6. A method for load balancing, comprising:
sending, by a switch, a path selection policy supported by a group table to a controller;
determining, by the controller, an appointed path selection policy according to the received path selection policy and an Application (APP) or a service requirement of the controller;
sending, by the controller, a Select-type group table entry and the appointed path selection policy to the switch; and
when executing a Select-type group table on traffic, executing, by the switch, a path selection algorithm according to the received appointed path selection policy.

7. The method according to claim 6, wherein when the path selection policy supported by the group table is per-flow,
the method further comprises:
sending, by the switch, a path selection key value to the controller; and
determining, by the controller, an appointed path selection key value according to the received path selection key value and the APP or the service requirement of the controller, and sending the appointed path selection key value to the switch,
correspondingly, executing the path selection algorithm comprises:
executing, by the switch, the path selection algorithm according to the received appointed path selection policy and the appointed path selection key value.

8. A switch, comprising:
a first sending unit, configured to send a path selection policy supported by a group table;
a first receiving unit, configured to receive a Select-type group table entry and an appointed path selection policy; and
an execution unit, configured to execute, when executing a Select-type group table on traffic, a path selection algorithm according to the received appointed path selection policy.

9. The switch according to claim 8, wherein the first sending unit is further configured to send a path selection key value;
the first receiving unit is further configured to receive an appointed path selection key value; and
the execution unit is specifically configured to execute, when executing the Select-type group table on the traffic, the path selection algorithm according to the received appointed path selection policy and the appointed path selection key value.

10. The switch according to claim 9, wherein the execution unit is specifically configured to extract an element from a message according to the path selection key value, and execute a per-flow algorithm.

11. A controller, comprising:
a second receiving unit, configured to receive a path selection policy supported by a group table;
a determination unit, configured to determine an appointed path selection policy according to the received path selection policy and an Application (APP) or a service requirement of the controller; and
a second sending unit, configured to send a Select-type group table entry and the appointed path selection policy.

12. The controller according to claim 11, wherein the second sending unit is further configured to receive a path selection key value;
the determination unit is further configured to determine an appointed path selection key value according to the received path selection key value and the APP or the service requirement of the controller; and
the second sending unit is further configured to send the appointed path selection key value.

13. A system for load balancing, comprising a controller and at least one switch, wherein
the switch is configured to send a path selection policy supported by a group table to the controller, and execute, when executing a Select-type group table on traffic, a path selection algorithm according to the appointed path selection policy sent by the controller; and
the controller is configured to determine an appointed path selection policy according to the path selection policy sent by the switch and an Application (APP) or a service requirement of the controller, and send a Select-type group table entry and the appointed path selection policy to the switch.

14. The system according to claim 13, wherein when the path selection policy supported by the group table is per-flow, the switch is configured to send a path selection key value to the controller, and execute the path selection algorithm according to the appointed path selection policy sent by the controller and an appointed path selection key value; and
the controller is further configured to determine the appointed path selection key value according to the received path selection key value and the APP or the service requirement of the controller, and send the appointed path selection key value to the switch.

15. A computer storage medium, having computer executable instructions stored therein configured to execute the method according to any one of claims 1 to 3, claims 4 to 5 and claims 6 to 7.
